# EUROPÄISCHE PATENTANMELDUNG

(11) **EP 0 889 338 A1**
(43) Veröffentlichungstag der Anmeldung: **07.01.1999**
(21) Anmeldenummer: 98111565.2
(22) Anmeldetag: 24.06.1998
(51) Int. Cl.: G02B 6/38

(54) **Inneres Gehäuseteil eines optischen Steckers, Verwendung des inneren Gehäuseteils in einem optischen Stecker und Verfahren zur Herstellung des inneren Gehäuseteils**

(30) Priorität: 30.06.1997 EP 97110652
(71) Anmelder: THE WHITAKER CORPORATION, Wilmington, Delaware 19808 (US)
(72) Erfinder: Vergeest, Henricus Jozef, 5213 XH 's-Hertogenbosch (NL)
(74) Vertreter: Heinz-Schäfer, Marion

(57) **Zusammenfassung**

Es wird ein inneres Gehäuseteil eines optischen Steckers angegeben mit zumindest einer ersten Bohrung (2) zur Aufnahme von je einem Lichtwellenleiterende und mit zumindest zwei zweiten Bohrungen (3) zur Aufnahme von je einem Positionierstift. Das innere Gehäuseteil (5) weist steckgesichtseitig eine Platte (4) aus einem hochpräzise bearbeiteten Material auf, die erste und zweite Bohrungen (2,3) aufweist. Die Platte (4) ist mit einem Kunststoffmaterial überspritzt.

## Beschreibung

Die Erfindung betrifft ein inneres Gehäuseteil eines optischen Steckers mit zumindest einer ersten Bohrung zur Aufnahme von je einem Lichtwellenleiterende und mit zumindest zwei zweiten Bohrungen zur Aufnahme von je einem Positionierstift. Weiter betrifft die Erfindung die Verwendung eines solchen inneren Gehäuseteils in einem optischen Stecker und ein Verfahren zur Herstellung eines solchen inneren Gehäuseteils.

Aus der EP 666 602-A2 ist ein optischer Stecker mit einem inneren Gehäuseteil bekannt (siehe Figur 2), das in einer Ebene eine Reihe von ersten Bohrungen zur Aufnahme von je einem Lichtwellenleiterende und auf jeder Seite dieser Reihe je eine zweite Bohrung aufweist zur Aufnahme von je einem Positionierstift. Das innere Gehauseteil ist komplett aus einem hochpräzis überarbeiteten Material hergestellt, um die Genauigkeit der ersten und zweiten Bohrungen an sich und zueinander zu gewährleisten. Es kommt bei der Herstellung von optischen Steckern wesentlich darauf an, dass die Lichtwellenleiterenden sehr genau zueinander ausgerichtet sind. Dies wird mit Hilfe dieses genau bearbeiteten inneren Gehäuseteils, auch "Ferrule" genannt, erreicht. Aufgrund der hohen Genauigkeit, die notwendig ist, und dem daher eingesetzten hochpräzise überarbeiteten Material für den inneren Gehäuseteil ist die Erstellung der optischen Stecker teuer.

Es ist Aufgabe der Erfindung eine kostengünstigere Lösung anzugeben, die trotzdem die hohe Genauigkeit garantiert.

Weiter ist es Aufgabe eine Verwendung, sowie ein Verfahren zur Herstellung des inneren Gehäuseteils anzugeben.

Die Aufgabe wird gelöst durch ein inneres Gehäuseteil mit den Merkmalen des Patentanspruches 1, durch eine Verwendung nach Anspruch 6 sowie durch ein Verfahren mit Merkmalen des Patentanspruches 7.

Vorteilhafte Weiterbildungen sind jeweils in den Unteransprüchen angeben.

Der Grundgedanke der Erfindung ist nicht das gesamte innere Gehäuseteil, "Ferrule", aus einem hochpräzise bearbeitbaren Material herzustellen, sondern nur eine im Verhältnis zum inneren Gehäuseteil dünnere Platte, die das steckgesichtseitige Ende des Gehäuseteils formt. Diese Platte weist erste und zweite Bohrungen für die Lichtwellenleiterenden und für Positionierstifte auf. Aufgrund dieser hochpräzise hergestellten Bohrungen und mit Hilfe von genau bearbeiteten Positionierstiften ist es möglich, zwei optische Stecker hochgenau zueinander auszurichten. Die Platte wird nun zur Bildung des kompletten inneren Gehäuseteils mit einem Kunststoffmaterial überspritzt oder mit einem hinteren Gehäuseteil zusammengefügt, beispielsweise verklebt. Da die Justage mittels der Positionierstifte und der zweiten Bohrungen ausgeführt wird, ist eine hochgenaue Bearbeitung der Aussenwände des inneren Gehäuseteils nicht notwendig. Der Vorgang des Überspritzens der Platte kann also mit üblichen Methoden durchgeführt werden, die die hohe Genauigkeit nicht garantieren. Ein separater hinterer Gehäuseteil dient also zur Führung der Fasern, nicht aber zur genauen Definition der Lage der Faserenden und muss daher nicht höchpräzise bearbeitet sein.

Zur Herstellung der Platte bieten sich mehrere Techniken an. Eine Möglichkeit ist, dass die Platte durch Ziehen aus einer Glasvorform und anschliessendes in Scheiben schneiden hergestellt wird. Die Platte kann aber auch aus Keramik hergestellt werden. Es ist dabei möglich einen Keramikstab mit hochpräzisen Bohrungen herzustellen und eine Reihe von Platten von diesem Stab abzuschneiden. Die Platte kann auch aus einem hochpräzisen Kunststoff, z.B. durch Extrusion, hergestellt werden.

Nachdem die hochpräzise bearbeitete Platte vorliegt, kann das innere Gehäuseteil hergestellt werden, indem die Platte in eine Spritzwanne oder Spritzform eingelegt wird, die Bohrungen mit Kernstiften gefüllt werden und die Spritzform mit einem Kunststoff ausgespritzt wird. Die zweiten Bohrungen können auch direkt mit den Positionierstiften gefüllt werden, so dass diese bereits in dem inneren Gehäuseteil miteingespritzt sind.

Ein Ausführungsbeispiel der Erfindung soll anhand der Zeichnungen erläutert werden. Es zeigen:
Figur 1 eine von einem Glasstab abgeschnittene Scheibe,
Figur 2 die Platte für das innere Gehäuseteil und
Figur 3 das fertige innere Gehäuseteil.

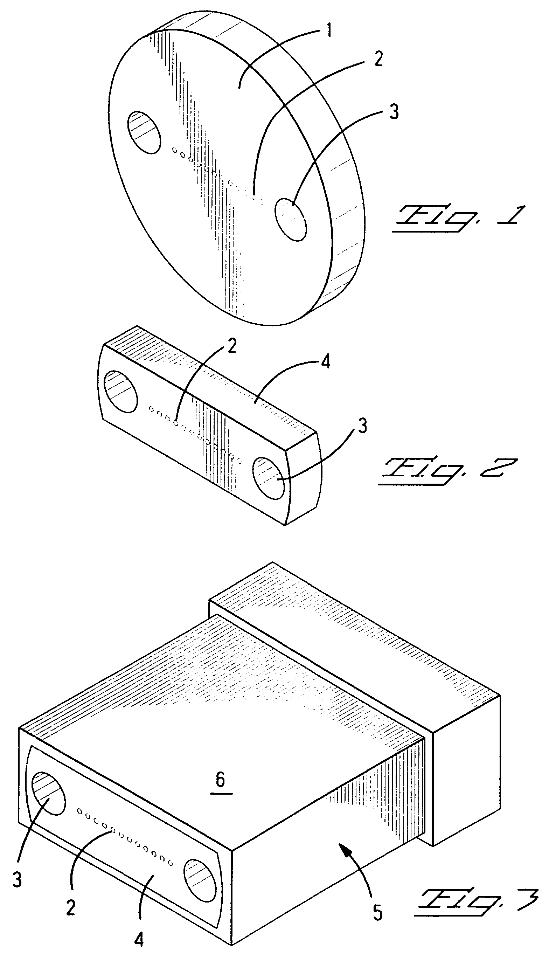

In Figur 1 ist eine Scheibe 1 zu erkennen, die von einem Glasstab abgeschnitten wurde. Die Scheibe weist vier erste Bohrungen 2 auf, die zur Aufnahme von je einem Lichtwellenleiterende vorgesehen sind. Sie sind derart dimensioniert, dass ein Lichtwellenleiterende entsprechend in diese Bohrungen eingeführt und dort genau zentriert gehalten werden kann. Weiter weist die Scheibe 2 zweite Bohrungen 3 auf. Diese Bohrungen sind zur Aufnahme von Je einem Positionierstift vorgesehen. Die ersten Bohrungen 2 liegen in einer Ebene. Jeweils am linken und am rechten Rand der Reihe von Bohrungen 2 befindet sich mit dem Mittelpunkt in der gleichen Ebene eine zweite Bohrung zur Aufnahme eines Positionierstiftes.

In Figur 2 ist nun eine fertig bearbeitete Platte 4 zu erkennen, die die ersten Bohrungen 2 und die zweiten Bohrungen 3 aufweist.

In Figur 3 ist diese Platte 4 mit den ersten und zweiten Bohrungen 2, 3 in ein inneres Gehäuseteil 5 für einen optischen Stecker eingebracht. Die Platte 4 bildet das steckgesichtseitige Ende des inneren Gehäuseteils. Dieses steckgesichtseitige Ende ist umgeben von einem Kunststoffmaterial, das das hintere Gehäuseteil und somit die Aussenwände des inneren Gehäuseteils bildet. Das hinteren Gehäuseteil dient der Führung der Lichtleitfasern, nicht jedoch zur Positionierung wozu die Platte 4 dient. Das innere Gehäuseteil 5 kann in einen optischen Stecker eingesetzt werden. Dabei trägt ein Stecker des komplementären Steckerpaares zwei Positionierstifte in den zweiten Bohrungen 3, während im zweiten Stecker diese Öffnungen frei sind. Werden die beiden Stecker miteinander verbunden, so sorgen die Positionierstifte für die Ausrichtung der Lichtwellenleiter zueinander. Es ist also wichtig, dass die Lage der Positionierstifte gegenüber der Lage der Lichtwellenleiter hochpräzise ist. Ist diese Ausrichtung zueinander gewährleistet, so ist auch die Ausrichtung der Lichtwellenleiter zueinander gewährleistet und somit dafür gesorgt, dass die Dämpfung, die durch den Stecker erzeugt wird, nicht zu hoch ist.

## Patentansprüche

1. Inneres Gehäuseteil eines optischen Steckers mit zumindest einer ersten Bohrung (2) zur Aufnahme von je einem Lichtwellenleiterende und mit zumindest zwei zweiten Bohrungen (3) zur Aufnahme von je einem Positionierstift, dadurch gekennzeichnet, dass das innere Gehäuseteil (5) steckgesichtseitig eine Platte (4) aus einem hochpräzise bearbeiteten Material aufweist, die erste und zweite Bohrungen (2,3) aufweist und dass die Platte (4) mit einem hinteren Gehäuseteil verbunden ist zur Bildung des inneren Gehäuseteils.

2. Inneres Gehäuseteil nach Anspruch 1, dadurch gekennzeichnet, dass die Platte (4) mit einem Kunststoffmaterial überspritzt ist.

3. Inneres Gehäuseteil nach einem der Ansprüche 1 oder 2, dadurch gekennzeichnet, dass mehrere erste Bohrungen beabstandet in einer Ebene sind.

4. Inneres Gehäuseteil nach einem der Ansprüche 1 bis 3, dadurch gekennzeichnet, dass die steckgesichtseitige Aussenwand des inneren Gehäuseteils (5) zumindest bereichsweise von der Platte (4) gebildet wird und die anderen Aussenwände vom hinteren Gehäuseteil gebildet sind.

5. Inneres Gehäuseteil nach einem der Ansprüche 1 bis 3, dadurch gekennzeichnet, dass die Platte (4) aus Glas oder Metall oder Keramik hergestellt ist.

6. Verwendung eines inneren Gehäuseteils nach einem der Ansprüche 1 bis 5 in einem optischen Stecker.

7. Verfahren zur Herstellung eines inneren Gehäuseteils nach einem der Ansprüche 1 bis 5, dadurch gekennzeichnet, dass die Platte (4) durch Ziehen aus einer Glasvorform und in Scheiben schneiden hergestellt ist.

8. Verfahren nach einem der Ansprüche 1 bis 5, dadurch gekennzeichnet, dass die Platte (4) von einem Keramikstab mit hochpräzisen Bohrungen abgeschnitten wird.

9. Verfahren nach einem der Ansprüche 7 oder 8, dadurch gekennzeichnet, dass die Platte (4) in eine Spritzwanne eingelegt wird, dass die Bohrungen mit Kernstiften gefüllt werden und die Spritzform mit Kunststoff ausgespritzt wird.

10. Verfahren nach einem der Ansprüche 7 oder 8, dadurch gekennzeichnet, dass die Platte (4) in eine Spritzform eingelegt wird, die ersten Bohrungen (2) mit Kernstiften und die zweiten Bohrungen (3) mit Positionierstiften gefüllt werden und die Spritzform mit Kunststoff ausgespritzt wird.
